Europäisches Patentamt

European Patent Office

Office européen des brevets

(19)

(11) EP 0 931 403 B1

## (12) FASCICULE DE BREVET EUROPEEN

(45) Date de publication et mention
de la délivrance du brevet:
**24.08.2005 Bulletin 2005/34**

(21) Numéro de dépôt: **98930853.1**

(22) Date de dépôt: **12.06.1998**

(51) Int Cl.⁷: **H04L 12/56**

(86) Numéro de dépôt international:
**PCT/FR1998/001239**

(87) Numéro de publication internationale:
**WO 1998/057466 (17.12.1998 Gazette 1998/50)**

(54) **PROCEDE DE TRADUCTION D'UN EN-TETE DE CELLULE POUR COMMUTATEUR ATM**

VERFAHREN ZUR ÜBERSETZUNG EINES ATM-ZELLENKOPFS

METHOD FOR TRANSLATING AN ATM SWITCH CELL HEADER

(84) Etats contractants désignés:
**DE FR GB IT**

(30) Priorité: **13.06.1997 FR 9707355**

(43) Date de publication de la demande:
**28.07.1999 Bulletin 1999/30**

(73) Titulaire: **Thales**
**75008 Paris (FR)**

(72) Inventeurs:
• **DELATTRE, Michel**
**Thomson-CSF Propriété Intel.**
**94117 Arcueil Cedex (FR)**
• **GUERIN, Didier Thomson-CSF Propriété Intel.**
**94117 Arcueil Cedex (FR)**
• **BAVANT, Marc**
**Thomson-CSF Propriété Intellectuelle**
**94117 Arcueil Cedex (FR)**

(56) Documents cités:
**EP-A- 0 552 384    WO-A-95/34977**
**WO-A-96/23391    US-A- 5 414 701**

**Description**

La présente invention concerne un procédé de traduction d'un en-tête de cellule appliquée à l'entrée d'un noeud d'un réseau asynchrone de transmission de données par paquets.

Elle s'applique notamment aux équipements de brassage et de commutation de données numériques composant un réseau fonctionnant dans le mode de transmission connu sous l'abréviation anglosaxonne ATM de «Asynchronous Transfert Mode».

Le mode de transfert asynchrone ATM est principalement défini dans les recommandations de l'UIT-T (série I), ainsi que dans les travaux d'un groupement d'industriels ayant pris le nom de «ATM Forum».

Dans le mode de transfert asynchrone ATM les informations à transmettre sont regroupées sous forme de paquets. L'ensemble en-tête plus données prend le nom de cellule. Dans son principe l'ATM fonctionne dans un mode connecté, c'est-à-dire qu'il nécessite d'établir un chemin dans le réseau de transmission avant de pouvoir émettre les données. Ce chemin est dénommé « circuit virtuel ». Il y a en général de nombreux circuits virtuels qui empruntent la même connexion physique entre deux équipements ATM. L'en-tête des cellules a principalement pour rôle de permettre l'identification des circuits virtuels sur la liaison. Un exemple de mise en oeuvre d'un tel procédé est notamment connu de la demande de brevet français n° 2 681 164 déposée au nom de la Demanderesse.

Un circuit virtuel est obtenu en mettant bout à bout des canaux de communication virtuels établis entre commutateurs adjacents. Ces canaux sont de deux types : conduits virtuels (« Virtual path » en anglais) ou voies virtuelles (« Virtual channel » en anglais), les voies virtuelles étant considérées comme une subdivision des conduits virtuels. Sur une artère donnée, tout circuit virtuel est parfaitement déterminé en indiquant l'identifiant du conduit virtuel (VPI) et celui de la voie virtuelle (VCI) qu'il emprunte, s'il s'agit d'un circuit à commuter en mode VC (VCC), ou bien en indiquant seulement l'identifiant du conduit virtuel (VPI), s'il s'agit d'un circuit à commuter en mode VP (VPC).

Selon ce procédé, chaque cellule à acheminer dans un réseau est composée d'une part, d'un en-tête permettant de l'identifier et de la guider à travers les canaux composant le circuit virtuel, et d'autre part, d'une partie contenant les informations à véhiculer. L'acheminement est assuré au niveau de chaque noeud du réseau en extrayant de l'en-tête l'adresse d'un mot contenu dans une première mémoire de contexte contenant les informations nécessaires à l'identification de l'en-tête et au guidage des données à véhiculer et en créant à partir du mot lu dans la première mémoire de contexte une nouvelle adresse. Cette nouvelle adresse sert de pointeur vers une zone d'une deuxième mémoire de contexte dans laquelle se trouve au moins un nouvel en-tête et une information de direction sortante pour la ou les cellules sortant du noeud.

La fonction de traduction qui est ainsi réalisée permet d'associer à chaque cellule les informations lui permettant de subir les traitements auxquels elle est destinée. Le traducteur qui a la charge d'exécuter cette fonction sur chaque cellule qu'il reçoit doit typiquement fournir des informations sur la validité de l'identifiant de conduit virtuel, la validité de l'identifiant de voie virtuelle, le comptage, la liste des directions sortantes sur lesquelles est émise la cellule reçue, le nouvel en-tête associé à la cellule lors de son émission etc. Le traducteur doit également exécuter les traitements correspondant au contexte défini précédemment pour chaque cellule. Ces traitements concernent notamment la commutation de conduit virtuel (VP), la commutation de voie virtuelle (VC) et l'extraction des flux de maintenance.

Au plan structurel la fonction de traduction est réalisée à l'aide d'un plan de mémoire adressé par une unité de traitement microprogrammée.

Mais ce plan de mémoire dont la taille, très importante, peut contenir par exemple $2^{32}$ mots de 16 bits, est difficile à gérer.

Pour pallier cette difficulté il a été proposé dans la demande de brevet français publiée sous le n° 2 726 669 déposée par la demanderesse d'adresser l'espace mémoire du noeud à partir du numéro de conduit virtuel VPI contenu dans l'en-tête de la cellule pour identifier dans cet espace une première zone de contexte indiquant la plage des voies virtuelles utilisables par la cellule pour ce VPI

-  et d'adresser une deuxième zone de contexte à partir d'un numéro de voie virtuelle VCI contenu dans l'en-tête de la cellule et d'une adresse de base lue dans la première zone de contexte pour obtenir la liste des directions que doit prendre la cellule à la sortie du noeud, ainsi que le nouvel en-tête.

Mais ce procédé s'avère mal adapté aux contraintes imposées par les nouvelles interfaces virtuelles des commutateurs comme par exemple l'interface « Virtuel UNI » spécifiée au chapitre A7-4 de la spécification « UNI signalling version 4.0 » de l'ATM Forum. Il ne permet pas par exemple un réaménagement de la mémoire de traduction lorsque est modifié le nombre d'utilisateurs qui, sur une même interface physique, se partageent les capacités de conduit virtuel.

Ceci se traduit par l'apparition de trous dans la mémoire de traduction qui limitent les possibilités d'exploitation de l'ensemble du spectre des valeurs possibles VPI et VCI .

Le but de l'invention est de pallier les inconvénients précités.

A cet effet, l'invention a pour objet un procédé de traduction d'un en-tête de cellule ATM pour son acheminement sur une artère de transmission d'un réseau de communication via un commutateur ATM, l'entête de la cellule comportant un premier champ VPI et un deuxième champ VCI, le premier champ VPI identifiant un numéro de conduit virtuel et le deuxième champ VCI sélectionnant une voie virtuelle déterminée au sein du conduit virtuel, caractérisé en ce qu'il consiste :

- à mémoriser dans une première table majeure des numéros de page de contexte d'indirection,
- à mémoriser dans une deuxième table majeure des numéros de page de contexte pour les circuits en mode de commutation VP,
- à mémoriser dans des pages de contexte d'indirection des numéros de pages de contexte pour les circuits en mode de commutation VC,
- à adresser par l'intermédiaire d'une page de contexte d'indirection des numéros de pages de contexte les pages de contexte de circuits en mode de commutation VC à partir de la première table majeure et du deuxième champ VCI, et
- à adresser les pages de contexte des circuits en mode de commutation VP à partir de numéros de page de contexte contenus dans la deuxième table majeure.

L'invention a principalement pour avantage d'associer les N contextes déterminés par la taille de mémoire disponible à un nombre de connexions du même ordre de grandeur que N, même si les identifiants (VPI, VCI) de ses connexions décrivent des plages de valeurs multiples parmi les $2^{28}$ valeurs théoriquement possibles. Elle permet également des modifications partielles de la configuration d'un réseau consistant par exemple à modifier un mode de commutation VP en un mode VC pour une valeur VPI déterminée ou encore à activer / désactiver une suite conséquente de valeurs VPI, sans altérer le fonctionnement opérationnel faisant intervenir les valeurs VPI et VCI non concernées par la modification. Comme autre avantage la taille de la mémoire de traduction est adaptée au strict besoin d'un nombre limité de connexions (VPC ou VCC indifféremment), ce nombre étant faible par rapport aux nombres de combinaisons possibles des valeurs VPI/VCI. D'autre part, les opérations de traduction, notamment celles induisant des accès mémoires lents, sont réduites à un nombre minimum ce qui permet de traiter des flux ATM de forts débits, par exemple supérieurs à 155 Mbps. Enfin elle permet l'installation d'une déviation temporaire vers une sonde de test intégrée en mode de commutation VP pour observer le trafic sur certaines voies virtuelles VC.

D'autres caractéristiques et avantages de l'invention apparaîtront dans la description qui suit, faite en regard des dessins annexés qui représentent :

La figure 1 l'organisation d'une mémoire de traduction selon l'invention.
Les figures 2A et 2B le format d'un champ VPI d'un entête de cellule.
La figure 3 le format d'un champ VCI d'un entête de cellule.
La figure 4 un schéma illustrant le mode d'adressage mis en oeuvre par l'invention pour accéder à des contextes dans les modes de commutation VP et VC.
La figure 5 un organigramme représentant l'enchaînement des différentes étapes selon l'invention du procédé d'adressage de la mémoire de traduction pour aiguiller une cellule ATM entrante à l'intérieur d'un commutateur.

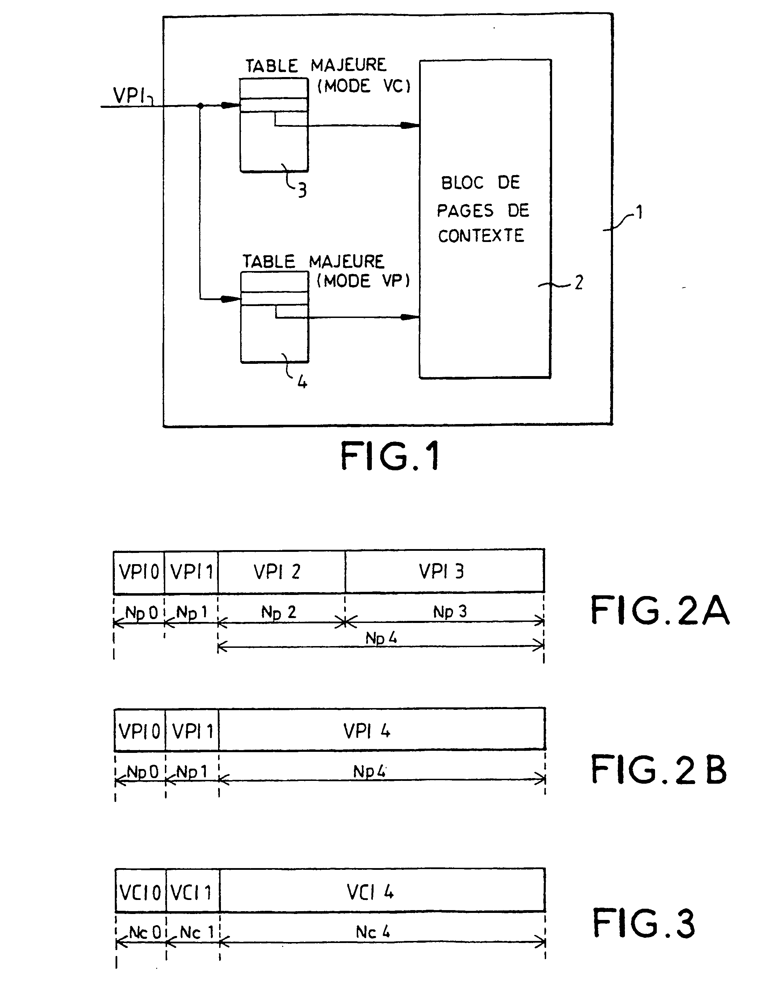

Selon le mode de réalisation de la figure 1, la mémoire de traduction 1 est structurée en un bloc de pages de contexte 2 banalisées, c'est-à-dire utilisées aussi bien pour les informations relatives aux circuits en mode VP, en mode VC, ou pour contenir des informations d'indirection. Toutes les pages ont une taille identique. Elles contiennent un nombre d'informations élémentaires (« contextes ») qui dépend du type de la page concernée. Dans cette réalisation une page peut être adressée à partir d'une première 3 ou d'une deuxième 4 table majeure d'indexation qui mémorisent respectivement des champs d'indexation relatifs aux circuits en mode VC et VP. Les tables 3 et 4 sont adressées par les bits de poids forts du champ VPI lu dans l'entête de chaque cellule ATM entrante dans le commutateur. En mode de commutation VC le champ VPI est formé des zones VPI0, VPI1, VPI2 et VPI3 représentées fig 2 A et en mode commutation VP, le champ VPI est formé des zones VPI0, VPI1 et VPI4 représentées figure 2B. Sur la figure 2B la zone de bits VPI4 a une longueur égale à la somme des longueurs de bit des zones VPI2 ET VPI3 de la figure 2A. Le champ VCI utilisé pour la commutation en mode VC qui est représenté à la figure 3 est formé des champs VCI0, VCI1 ET VCI4.

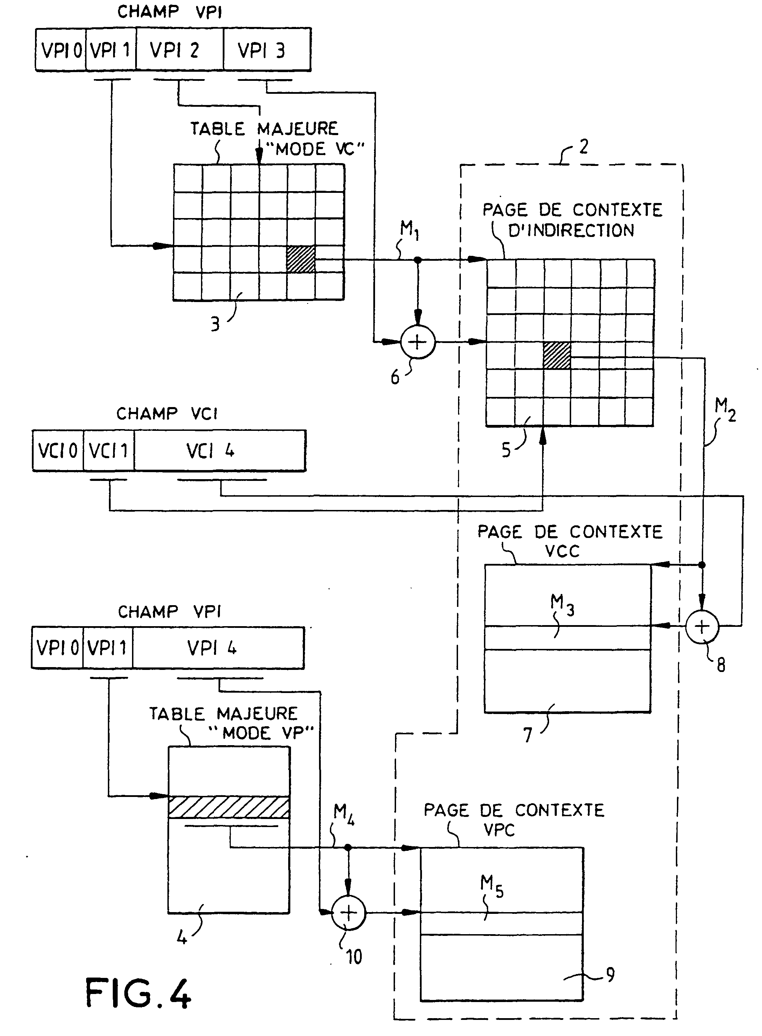

L'adressage des pages de contexte à partir des tables majeures 3 et 4 a lieu suivant le schéma de la figure 4 où les éléments homologues à ceux de la figure 1 sont représentés avec les mêmes références. Pour une commutation en mode VC la table majeure 3 est adressée par les bits de poids fort VPI1 et VPI2. Le mot trouvé $M_1$ sert de pointeur vers une page de contexte d'indirection 5 qui recense les adresses des pages de contexte du bloc de page 2. Sur la figure 4 les adresses des pages de contexte sont situées aux croisements de lignes et de colonnes. L'adresse d'une ligne est obtenue en ajoutant en 6 au pointeur de page trouvé dans la table majeure 3, le contenu de la zone VPI3 du champ VPI. Le mot $M_2$ qui est ainsi trouvé à l'adresse indiquée par les zones ($M_1$, VPI3, VCI1) est ensuite utilisé comme pointeur vers une page de contextes VCC7. La zone de contexte recherchée $M_3$ est trouvée à l'intérieur de la page de contexte 7 en ajoutant en 8 au pointeur $M_2$ le contenu de la zone VCI4 du champ VCI. En mode de commutation VP, l'adresse de la page de contexte 9 est trouvée en lisant le mot $M_4$ de la table majeure d'indexation en mode VP à l'adresse fournie par la zone VPI1 du champ VPI. La zone de contexte re-

cherchée $M_5$ est ensuite trouvée à l'intérieur de la page de contexte 9 en ajoutant en 10 le contenu du mot $M_4$ au contenu de la zone VPI4 du champ VPI.

Suivant une des caractéristiques de l'invention la taille des contextes VPC et VCC est constante et est déterminée par la relation $T_{VPC} = T_{VCC} = 2^M$ où M est un nombre entier indépendant des tailles de pages. La taille d'un contexte d'indirection est $T_{IND} = 1$.

En désignant par Np0, Np1, Np2, Np3 et Np4 les nombres de bits constituant respectivement les zones VPI0, VPI1, VPI2, VPI3 et VPI4 du champ VPI et par Nc0, Nc1 et Nc4 les nombres de bits constituant respectivement les zones VCI0, VCI1 et VCI4, la taille des pages de contexte est définie comme suit :

- taille d'une page de contexte VPC = $2^{Np4}.T_{VPC}$
- taille d'une page de contexte VCC = $2^{Nc4}.T_{VCC}$
- taille d'une page de contextes d'indirection = $2^{NP3}.2^{NC1}.T_{IND}$.

Comme la taille des pages est constante les relations précédentes permettent d'écrire

$$Np4 = Nc4 = Nc1 + Np3 - M$$

Par ailleurs, il existe les relations suivantes :

$$Np0 + Np1 + Np2 + Np3 = P$$

$$Np2 + Np3 = Npy$$

$$Nc0 + Nc1 + Nc4 = C = 28-P$$

Les tailles des tables majeures ont respectivement pour valeur $2^{Np1}.2^{Np2}.T_{IND}$ pour la table majeure (mode VC) 3 et $2^{Np1}.T_{IND}$ pour la table majeure (mode VP) 4.

En prenant comme paramètres P = 12, on obtient les relations suivantes.

$$2\,Np1 = Nc0-Np0+2P+M-20$$

$$2\,Nc1 = Np0-Nc0-2P+M+36$$

$$2\,Np2 = Np0-Nc0-2P-M+36$$

$$2\,Nc4 = 2Np4 = 20-M-Np0-Nc0$$

$$2\,Np3 = 2P-16-2Np0$$

A titre d'exemple, un dimensionnement avec M = 5 peut être le suivant :

(Np0,Nc0) = (2,5) bits ou (1,4) bits ou (1,0) bits
Np1 = 0 ou 1 ou 4 ou 5 bits selon le nombre de bits actifs du champ VCI ce qui donne :

- un bloc de 255 pages,
- une table majeure pour une commutation VC de 64 mots de 4 octets, la taille d'une entrée étant fonction de la taille de page choisie,
- une table majeure pour une commutation VP de 16 mots de 4 octets, la taille d'une entrée étant fonction de la taille de page choisie,
- une taille unique de contexte de 8 mots.

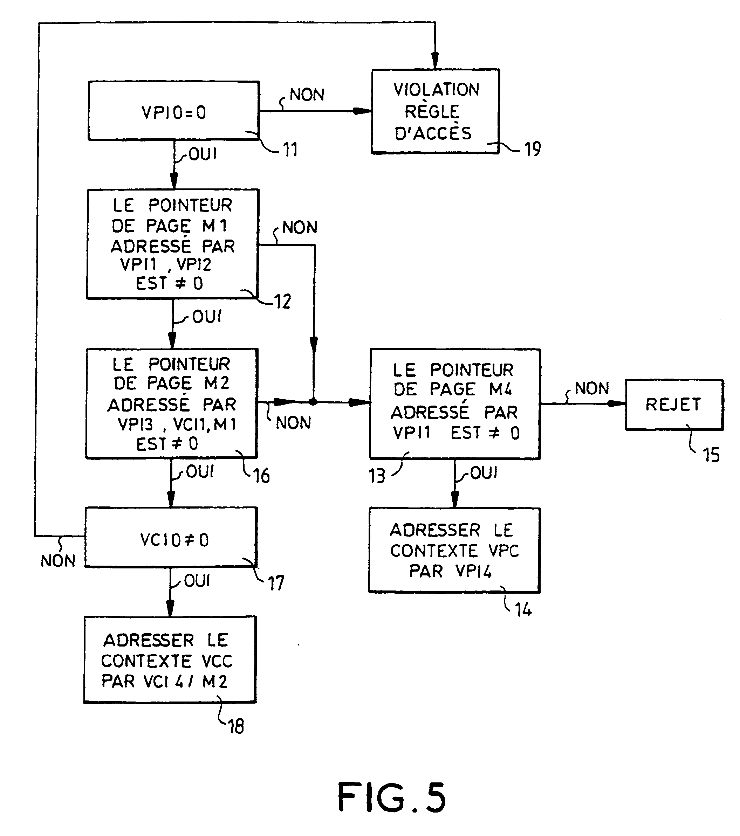

Un algorithme pour la mise en oeuvre du procédé d'adressage selon l'invention est décrit ci-après à l'aide des étapes 11 à 21 de l'organigramme de la figure 5;

Sur cet organigramme le procédé de traduction commence à l'étape 11 par une vérification de la validité de l'identifiant de circuit virtuel en extrayant par une intersection logique, par exemple, les bits de la zone VPI0. Si l'identifiant n'est pas valide la cellule est rejetée à l'étape 19. Si l'identifiant est validé, l'étape 12 est exécutée pour accéder dans la table majeure 3 au pointeur $M_1$ d'une page d'indirection à l'adresse indiquée par les zones VPI1 et VPI2. Si le pointeur $M_1$ est nul, le mode de commutation VP est sélectionné en allant chercher à l'étape 13 le mot $M_4$ dans la table majeure 4 à l'adresse indiquée par la zone VPI1. Si le contenu du mot $M_4$ n'est pas nul un contexte VP est sélectionné à l'étape 14 dans la page de contexte $M_4$ du mode de commutation VP, à l'adresse indiquée par le contenu du champ VPI4. Dans le cas où le mot $M_4$ est nul la cellule est rejetée à l'étape 15. Si le test effectué à l'étape 12 indique que le contenu du pointeur $M_1$ n'est pas nul, alors une page de contexte VC est sélectionnée à l'étape 16 à l'adresse indiquée par le pointeur de page $M_2$ trouvé à l'intérieur de la page $M_1$ de contexte d'indirection 5 à l'adresse indiquée par les champs VPI3 et VCI1. Si $M_2$ est nul on revient au mode de commutation VP et l'on passe à l'étape 13. Si $M_2$ n'est pas nul, un test est effectué à l'étape 17 sur le contenu du champ VCI0. Si celui-ci est nul un contexte est sélectionné à l'étape 18 dans la page de contexte VCC adressée par le pointeur $M_2$, à l'adresse indiquée par le contenu du champ VCI4. Si VCI0 n'est pas nul la cellule est rejetée à l'étape 19. Lors des deux cas d'erreur identifiés sur cet organigramme (15 et 19) des compteurs spécifiques peuvent être incrémentés. Par ailleurs, lors des étapes 14 et 18 on vérifie dans le contexte atteint que le VPC ou le VCC concerné est actif avant d'effectuer la traduction.

Des variantes à ce procédé peuvent être mises en oeuvre pour l'adressage de pages, de 16, 32 et 128 contextes. A titre d'exemple, l'adressage de pages à 16 contextes peut avoir lieu en effectuant les opérations référencées de (a à k) suivantes :

a) extraire les 2 bits de poids forts du champ VPI et incrémenter le compteur de violations s'ils sont non nuls

b) prendre les 6 bits suivants (VPI1) et adresser la table majeure VPI du mode de commutation VC.

c) lire le mot sélectionné

d) prendre les 2 bits suivants (VPI2) et adresser (dans le mot sélectionné) l'octet désignant la page de contextes d'indirection;

e) si le pointeur page est nul,

prendre les 6 bits de 10 à 4 (VPI1) et adresser la table majeure VPI du mode VP,

lire le pointeur page VP sélectionné

si ce pointeur est non nul, le mode de commutation est VP passer alors à l'exécution de k.

sinon rejeter la cellule (incrémenter un compteur)

f) Sinon, prendre les 2 bits suivants (c'est-à-dire les 2 derniers bits du champ VPI) (VPI3) et sélectionner le contexte d'indirection dans la page.

g) prendre les bits 11 à 5 du champ VCI (VCI1) et adresser dans le contexte d'indirection le pointeur sur la page VC.

h) si ce pointeur est non nul (mode de commutation VC), vérifier qu'il n'y a pas violation en comparant les 5 premiers bits de VCI (VCI0) à la valeur nulle. S'il y a violation, incrémenter le compteur de violations et rejeter la cellule,

i) si non, sélectionner le contexte VC dans la page VC à partir des 4 bits de poids faible du champ VCI (VCI4) .

- tester l'indicateur d'activité de ce contexte VC avant d'utiliser les informations de ce contexte. Si l'indicateur est inactif, rejeter la cellule (incrémenter un compteur).

j) Si ce pointeur est nul, 2 cas peuvent se présenter : mode VP de commutation ou contexte VC inactif dans le mode de commutation VC :

- prendre les 6 bits de 10 à 4 (VPI1) et adresser la table majeure VPI du mode VP de commutation en mémoire rapide
- lire le pointeur page VP sélectionné
  si ce pointeur est non nul, le cas est un mode de commutation VP (passer alors à k)
  sinon le cas est un mode de commutation VC avec VCC inactif : rejeter la cellule (incrémenter un compteur)

k) Mode VP de commutation

- prendre les 4 derniers bits du champ VPI (VPI4) et sélectionner le contexte VP dans la page VP sélectionnée

- tester l'indicateur d'activité de ce contexte VP avant d'utiliser les informations de ce contexte.

Si l'indicateur est inactif, rejeter la cellule (incrémenter un compteur).

Des opérations similaires peuvent être exécutées pour l'adressage de pages à 32 et 128 contextes.

**Revendications**

1. Procédé de traduction d'un en-tête de cellule ATM pour son acheminement sur une artère de transmission d'un réseau de communication via un commutateur ATM, l'entête de la cellule comportant un premier champ VPI et un deuxième champ VCI, le premier champ VPI identifiant un numéro de conduit virtuel et le deuxième champ VCI sélectionnant une voie virtuelle déterminée au sein du conduit virtuel, consistant :

   - à mémoriser dans une première table majeure (3) des numéros de page de contexte d'indirection,
   - à mémoriser dans une deuxième table majeure (4) des numéros de page de contexte pour les circuits en mode de commutation VP,
     et **caractérisé ence qu'**il consiste
   - à mémoriser dans des pages de contexte (2) d'indirection (5) des numéros de pages de contexte (7) pour les circuits en mode de commutation VC,
   - à adresser par l'intermédiaire d'une page de contexte d'indirection (5) les pages de contexte (7) de circuits en mode de commutation VC à partir de la première table majeure (3) et du champ VCI, et
   - à adresser les pages de contexte (9) du mode de commutation VP à partir de numéros de page de contexte contenus dans la deuxième table majeure (4).

2. Procédé selon la revendication 1 **caractérisé en ce que** pour l'adressage d'une page de contexte en mode de commutation VC, le premier champ VPI comporte une première zone de bits VPI1 et une deuxième zone de bits VPI2 réservées à l'adressage de la première table majeure (3) de commutation en mode VC et une troisième zone de bits VPI3 réservée à l'adressage d'une page de contexte d'indirection (5) et **en ce que** le deuxième champ VCI comporte une première zone de bits VCI1 réservée avec la troisième zone de bits VPI3 à l'adressage à l'intérieur des pages de contexte d'indirection ainsi qu'une deuxième zone de bits VCI4 réservée à l'adressage d'un contexte à l'intérieur d'une page de contexte

**3.** Procédé selon la revendication 2, **caractérisé en ce qu'**il consiste à utiliser également, pour l'adressage d'une page de contexte en mode de commutation VP, la première zone de bits VPI1 pour l'adressage de mots à l'intérieur de la deuxième table majeure (4) de commutation en mode VP et une deuxième zone de bits VPI4 réservée comme mot d'indirection pour l'adressage d'un contexte à l'intérieur d'une page de contexte.

**Patentansprüche**

**1.** Verfahren zur Übersetzung eines Vorspanns einer ATM-Zelle für ihren Transport auf einem Übertragungsmittel eines Kommunikationsnetzes über einen ATM-Schalter, wobei der Vorspann der Zelle ein erstes Feld VPI und ein zweites Feld VCI aufweist, wobei das erste Feld VPI eine Nummer eines virtuellen Pfads identifiziert und das zweite Feld VCI einen bestimmten virtuellen Kanal innerhalb des virtuellen Pfads auswählt, wobei das Verfahren darin besteht:

- in einer ersten Haupttabelle (3) Nummern von Kontextseiten indirekter Adressierung zu speichern,
- in einer zweiten Haupttabelle (4) Nummern von Kontextseiten für die Schaltungen im Schaltmodus VP zu speichern,

und das Verfahren **dadurch gekennzeichnet ist, dass** es weiter darin besteht,

- in Kontextseiten (2) indirekter Adressierung (5) Nummern von Kontextseiten (7) für die Schaltungen im VC-Schaltmodus zu speichern,
- über eine Kontextseite indirekter Adressierung (5) die Kontextseiten (7) von Schaltungen im VC-Schaltmodus ausgehend von der ersten Haupttabelle (3) und vom Feld VCI zu adressieren, und
- die Kontextseiten (9) des VP-Schaltmodus ausgehend von Kontextseitennummern zu adressieren, die in der zweiten Haupttabelle (4) enthalten sind.

**2.** Verfahren nach Anspruch 1, **dadurch gekennzeichnet, dass** zum Adressieren einer Kontextseite im VC-Schaltmodus das erste Feld VPI einen ersten Bitbereich VPI1 und einen zweiten Bitbereich VPI2, die für die Adressierung der ersten Haupttabelle (3) der Durchschaltung im VC-Modus reserviert sind, und einen dritten Bitbereich VPI3 aufweist, der für die Adressierung einer Kontextseite indirekter Adressierung (5) reserviert ist, und dass das zweite Feld VCI einen ersten Bitbereich VCI1, der mit dem dritten Bitbereich VPI3 für die Adressierung im Inneren der Kontextseiten indirekter Adressierung reserviert ist, sowie einen zweiten Bitbereich VCI4 aufweist, der für die Adressierung eines Kontexts innerhalb einer Kontextseite reserviert ist.

**3.** Verfahren nach Anspruch 2, **dadurch gekennzeichnet, dass** es darin besteht, für die Adressierung einer Kontextseite im VP-Schaltmodus ebenfalls den ersten Bitbereich VPI1 für die Adressierung von Wörtern innerhalb der zweiten Haupttabelle (4) des VP-Schaltmodus und einen zweiten reservierten Bitbereich VPI4 als indirektes Adresswort für die Adressierung eines Kontexts innerhalb einer Kontextseite zu verwenden.

**Claims**

**1.** Process for translating an ATM cell header for the routing thereof on a transmission highway of a communication network via an ATM switch, the header of the cell comprising a first field VPI and a second field VCI, the first field VPI identifying a virtual path number and the second field VCI selecting a specified virtual channel within the virtual path, consisting:

- in storing indirect addressing context page numbers in a first major table (3),
- in storing context page numbers for the circuits in VP switching mode in a second major table (4),

and **characterized in that** it consists

- in storing context page numbers (7) for the circuits in VC switching mode in indirect addressing (5) context pages (2),
- in addressing the context pages (7) of circuits in VC switching mode by way of an indirect addressing (5) context page on the basis of the first major table (3) and of the field VCI, and
- in addressing the context pages (9) of the VP switching mode on the basis of context page numbers contained in the second major table (4).

**2.** Process according to Claim 1, **characterized in that** for the addressing of a context page in VC switching mode, the first field VPI comprises a first area of bits VPI1 and a second area of bits VPI2, which areas are reserved for the addressing of the first major table (3) for switching in VC mode, and a third area of bits VPI3 which is reserved for the addressing of an indirect addressing context page (5) and **in that** the second field VPI comprises a first area of bits VCI1 which is reserved together with the third area of bits VPI3 for addressing inside the indirect addressing context pages as well as a second area of bits VCI4 which is reserved for the addressing of a context inside a context page.

3. Process according to Claim 2, **characterized in that** it consists in also using, for the addressing of a context page in VP switching mode, the first area of bits VPI1 for the addressing of words inside the second major table (4) for switching in VP mode and a second area of bits VPI4 which is reserved as indirect addressing word for the addressing of a context inside a context page.

FIG.1

FIG.2A

FIG.2B

FIG.3

CHAMP VPI

| VPI 0 | VPI 1 | VPI 2 | VPI 3 |

TABLE MAJEURE
"MODE VC"

PAGE DE CONTEXTE
D'INDIRECTION

$M_1$

3

5

$M_2$

6

CHAMP VCI

| VCI 0 | VCI 1 | VCI 4 |

PAGE DE CONTEXTE
VCC

$M_3$

8

7

CHAMP VPI

| VPI 0 | VPI 1 | VPI 4 |

TABLE MAJEURE
"MODE VP"

$M_4$

PAGE DE CONTEXTE
VPC

$M_5$

4

10

9

FIG.4

VPI0=0 — 11 ——NON——→ VIOLATION RÈGLE D'ACCÈS — 19

|OUI

LE POINTEUR DE PAGE M1 ADRESSÉ PAR VPI1 , VPI2 EST ≠ 0 — 12 ——NON——

|OUI

LE POINTEUR DE PAGE M2 ADRESSÉ PAR VPI3 , VCI1, M1 EST ≠ 0 — 16 ——NON——→ LE POINTEUR DE PAGE M4 ADRESSÉ PAR VPI1 EST ≠ 0 — 13 ——NON——→ REJET — 15

|OUI (16)          |OUI (13)

VCI0≠0 — 17          ADRESSER LE CONTEXTE VPC PAR VPI4 — 14

NON

|OUI

ADRESSER LE CONTEXTE VCC PAR VCI 4 / M2 — 18

# FIG.5